# FASCICULE DE BREVET EUROPEEN

(11) **EP 3 023 158 B1**
(45) Date de publication et mention de la délivrance du brevet: **26.04.2017**
(21) Numéro de dépôt: 15194723.1
(22) Date de dépôt: 16.11.2015
(51) Int. Cl.: B03B 9/06, C22B 3/20, C22B 7/00, C22B 3/00, B09B 3/00

(54) **PROCEDE DE RECUPERATION DE L'ARGENT CONTENU DANS UN SUBSTRAT EN SILICIUM**
VERFAHREN ZUR RÜCKGEWINNUNG VON SILBER, DAS IN EINEM SILIZIUMSUBSTRAT ENTHALTEN IST
METHOD FOR RECOVERING SILVER CONTAINED IN A SILICON SUBSTRATE

(30) Priorité: 18.11.2014 FR 1461112
(43) Date de publication de la demande: 25.05.2016
(73) Titulaire: COMMISSARIAT À L'ÉNERGIE ATOMIQUE ET AUX ÉNERGIES ALTERNATIVES, 75015 Paris (FR)
(72) Inventeur: BILLY, Emmanuel, 38100 GRENOBLE (FR); FRAJER, Gaella, 38000 GRENOBLE (FR); DIAFERIA, Nathalie, 38220 LIVET et GAVET (FR)
(74) Mandataire: Cabinet Laurent & Charras

(56) Documents cités:
- EP-A1- 2 241 381
- CN-A- 102 851 506
- CN-A- 103 978 021
- JP-A- 2014 024 037

## Description

### DOMAINE DE L'INVENTION

La présente invention concerne un procédé permettant de récupérer les métaux contenus dans un substrat à base de silicium cristallin ou polycristallin. Il s'agit en particulier de la récupération de l'argent contenu dans les panneaux photovoltaïques.

### ETAT ANTERIEUR DE LA TECHNIQUE

De manière générale, les panneaux photovoltaïques (PV) sont utilisés pour convertir le rayonnement solaire en énergie thermique ou électrique. Ils sont généralement réalisés en silicium cristallin (90%) ou de type couche mince (10%).

Typiquement, un panneau photovoltaïque en silicium cristallin est constitué de cellules électroniquement connectées entre elles et délimitées par un cadre en aluminium. Il comprend non seulement du silicium, mais aussi du verre, de l'aluminium, des polymères, et des métaux tels que du zinc, du plomb, du cuivre et de l'argent.

Plus particulièrement, un panneau ou module photovoltaïque présente une ou deux faces recevant le rayonnement solaire, et comprend :
- des cellules photovoltaïques ;
- des électrodes, par exemple en cuivre, permettant de collecter le courant électrique généré par les cellules photovoltaïques ;
- des connecteurs électriques reliant les électrodes à l'extérieur du panneau photovoltaïque ;
- un matériau de protection transparent, généralement en verre, recouvrant les cellules, les électrodes, et les connecteurs électriques.

Une cellule photovoltaïque peut notamment comprendre un semi-conducteur de type n tel que le silicium dopé phosphore, associé via une jonction PN à un semi-conducteur de type p tel que silicium dopé bore.

Elle peut comprendre une couche antireflet composée, par exemple, de Ta₂O₅, TiO₂, SiO, Si₃N₄, SiO₂, Al₂O₃ ou ITO.

Au cours des années, le développement de filières de recyclage des panneaux photovoltaïques est devenu nécessaire pour diverses raisons :
- certains matériaux les constituant peuvent être onéreux ;
- leur durée de vie n'excède pas une vingtaine d'années ;
- la Directive du 13 août 2012 relative aux Déchets d'Equipements Electriques et Electroniques (DEEE) a été étendue aux panneaux photovoltaïques.

La valorisation et le recyclage des panneaux photovoltaïques consistent à au moins récupérer le verre et le cadre en aluminium. Il peut notamment s'agir du démantèlement des modules par voie chimique ou thermique, et du recyclage des différents éléments par une série de traitements spécialisés.

Les méthodes de l'art antérieur permettant de recycler les cellules photovoltaïques peuvent être divisées en deux groupes :
- les méthodes de dissolution non sélective. Elles permettent la dissolution totale de ses constituants, notamment les éléments métalliques (Cu, Ag, Sn, Pb, Al,..), la couche n-dopée (silicium), et éventuellement les antireflets ou anti-réfléchissants.
- les méthodes de dissolution en plusieurs étapes.

A titre d'exemple de la première de ces méthodes, le document JP 2005-311178 décrit le recyclage du silicium contenu dans les cellules photovoltaïques par :
- démantèlement d'un module photovoltaïque par traitements chimique puis thermique ;
- traitement thermique pour éliminer les polymères tels que l'éthylène vinyle acétate (EVA) à une température supérieure à 420°C ;
- traitement des cellules photovoltaïques par :
   ▪ élimination des électrodes métalliques, de la jonction PN et de la couche antireflet par traitement avec une solution d'acide nitrique et d'acide fluorhydrique ;
   ▪ immersion du silicium dans une solution d'acide chlorhydrique et de peroxyde d'hydrogène ;
   ▪ stabilisation du silicium avec un mélange d'ammoniac et de peroxyde d'hydrogène.

Les documents KR 101092259, KR 202356274 et KR 101207297 concernent des procédés permettant de recycler le silicium de cellules photovoltaïques par dissolution totale des composés métalliques. Ces procédés nécessitent l'utilisation de solutions acides à ébullition et pouvant comprendre de l'acide fluorhydrique, de l'acide nitrique, et de l'acide sulfurique éventuellement mélangés.

Le document KR 101296797 décrit le traitement de cellules constituées de silicium polycristallin, avec une solution alcaline contenant de l'acide phosphorique, du difluorure d'ammonium et des agents chélatants tels que l'acide oxalique, l'hydantoïne ou l'acide citrique. La récupération de métaux à forte valeur ajoutée n'y est pas décrite.

Le document CN 102343352 décrit un procédé pour recycler les tranches de silicium sans endommager la couche antireflet ou la jonction PN. En revanche, il ne permet pas de récupérer sélectivement l'argent.

La deuxième méthode de récupération évoquée ci-dessus consiste à dissoudre les métaux en plusieurs étapes.

A titre d'exemple, le document CN 102851506 décrit un procédé permettant de récupérer l'aluminium, puis l'argent, selon les étapes suivantes :
- élimination de l'aluminium par traitement de cellules photovoltaïques avec de l'acide chlorhydrique ;
- rinçage des cellules ;
- dissolution de l'argent avec de l'eau régale (HCl/HNO₃) ;
- élimination de la couche antireflet par addition d'acide fluorhydrique dans l'eau régale ;
- précipitation de l'argent par addition de fer ;
- purification du silicium dans une solution acide (HNO₃/HF).

Le document TW 201328990 décrit un procédé comprenant les étapes suivantes :
- broyage de cellules photovoltaïques ;
- traitement dans une solution d'acide sulfurique à 60-100°C ;
- récupération de l'aluminium par cristallisation à 100-150°C ;
- traitement des résidus solides contenant le silicium et l'argent avec une solution d'acide nitrique ;
- récupération de l'argent par réduction avec de l'acide hypophosphoreux et traitement avec de l'acide borique à 900-1100°C pour former des lingots d'argent.

Le document TW 200836850 décrit un procédé mettant en oeuvre la dissolution des métaux.

Le document EP 2 241 381 décrit un procédé de recyclage de métaux tels que le zinc, le cuivre ou l'argent, selon les étapes suivantes :
- broyage d'un matériau contenant ces métaux ;
- dissolution dans une solution d'acide fluorhydrique ;
- filtration des métaux n'ayant pas été dissous ;
- précipitation et récupération des métaux dissous par électrolyse de la solution d'acide fluorhydrique.

Quoi qu'il en soit, aucun des procédés de l'art antérieur ne permet de sélectivement et immédiatement récupérer l'argent contenu dans les cellules photovoltaïques. En effet, ces procédés concernent principalement :
- la valorisation du silicium par une dissolution complète des autres éléments ; ou
- la récupération du silicium, de l'aluminium et de l'argent par dissolution en plusieurs étapes.

Dans une cellule photovoltaïque, l'argent représente le métal ayant la valeur ajoutée la plus importante (près de 90% de la cellule). Par conséquent, la récupération sélective de l'argent constitue un enjeu considérable, par rapport aux autres métaux majoritairement présents.

Or, dans les conditions des procédés de l'art antérieur, l'argent peut uniquement être récupéré consécutivement à la dissolution d'autres constituants comme le silicium ou l'aluminium. Ceci implique des étapes additionnelles et une surconsommation de réactifs essentiellement pour séparer en amont des éléments tels que l'aluminium, dont la valeur ajoutée est nettement inférieure à celle de l'argent.

La récupération de l'argent par mise en oeuvre des procédés de l'art antérieur implique donc des contraintes économiques et environnementales qui sont uniquement liées à la nécessité de préalablement récupérer d'autres éléments comme le silicium et l'aluminium.

Le Demandeur a développé un procédé permettant de répondre à cette problématique en récupérant l'élément argent sélectivement et préalablement aux éléments tels que l'aluminium, le plomb ou le silicium.

### EXPOSE DE L'INVENTION

Le procédé objet de la présente invention permet de récupérer sélectivement et préalablement aux autres métaux l'argent contenu dans les dispositifs photovoltaïques de type cellule photovoltaïque en silicium.

Il met en oeuvre des conditions de traitement douces en termes d'acidité et de température. En outre, il peut être réalisé en cycle fermé, limitant ainsi le rejet de composés chimiques et donc l'impact sur le plan économique et environnemental.

De manière générale, un panneau photovoltaïque comprend une pluralité de cellules comprenant des électrodes reliées à l'extérieur du panneau photovoltaïque via des connecteurs électriques.

Les électrodes sont généralement en argent et les connecteurs électriques en cuivre. A titre d'exemple, l'électrode peut être une pâte de métallisation en argent pouvant comprendre une poudre de verre SiO₂, B₂O₃, PbO et ZnO, le matériau actif et un agent liant. Les connecteurs électriques peuvent être composés d'un coeur en cuivre enrobé de Sn₆₂Pb₃₆Ag₂ par exemple.

Une cellule en silicium est généralement en silicium cristallin ou polycristallin. Comme déjà indiqué, elle peut notamment comprendre un semi-conducteur de type n tel que le silicium dopé phosphore associé via une jonction PN à un semi-conducteur de type p tel que silicium dopé bore.

En outre, un panneau photovoltaïque contenant une pluralité de cellules photovoltaïques en silicium comprend principalement du verre, de l'aluminium, des polymères, du silicium et des métaux tels que zinc, plomb, cuivre et argent. A titre d'exemple, il peut contenir 74% en poids de verre, 10% en poids d'aluminium, 6.5% en poids de polymères, 3% en poids de silicium, et 6.5% en poids d'autres matériaux dont l'argent.

Les polymères peuvent être de type EVA (éthylène vinyle acétate), notamment lorsqu'ils sont utilisés pour encapsuler les cellules photovoltaïques.

Ainsi, une cellule en silicium issue du démantèlement d'un panneau, ou module, photovoltaïque comprend également du verre, de l'aluminium, des polymères, du silicium et de l'argent. Elle peut en outre comprendre d'autres métaux tels que Pb, Cu, Zn en très faible quantité.

Le procédé objet de la présente invention permet de récupérer cet argent. Il est mis en oeuvre après élimination des câbles, boîtes de jonction, et cadres métalliques du panneau photovoltaïques.

Plus précisément, la présente invention concerne un procédé de récupération de l'argent contenu dans une cellule photovoltaïque en silicium. Ce procédé comprend les étapes suivantes :
- formation de particules contenant l'élément argent, par broyage de ladite cellule photovoltaïque ;
- dissolution de l'élément argent contenu dans les particules, par traitement acide des particules avec une solution acide ayant un pH compris entre 2 et 4 et comprenant au moins un acide, au moins un agent complexant de l'argent, et au moins un oxydant ;
- récupération de l'élément argent à partir de la solution acide.

De manière générale, le procédé objet de l'invention permet de traiter 5% à 20% en poids de particules de cellule photovoltaïque broyée par rapport au poids de la solution acide, plus avantageusement 5% à 10% en poids.

Quand bien même ce procédé est destiné à récupérer l'argent contenu dans des cellules photovoltaïques, avantageusement en silicium cristallin ou polycristallin, il peut également être utilisé pour tout type de substrat en silicium amorphe contenant de l'argent.

Préalablement à la mise en oeuvre de ce procédé, la cellule photovoltaïque est récupérée par séparation et désolidarisation des cellules photovoltaïques d'un panneau photovoltaïque. Cette étape correspond généralement à un traitement thermique qui est avantageusement réalisé à une température comprise entre 400 et 700°C, plus avantageusement entre 450 et 550°C. La durée de ce traitement peut être comprise entre 30 et 120 minutes, plus avantageusement entre 60 et 90 minutes.

Ce traitement thermique préalable permet de désolidariser les cellules photovoltaïques, mais aussi d'éliminer les polymères les liant entre elles, notamment par encapsulation. Il peut être réalisé dans un four, sous azote, argon ou oxygène. Ainsi, les cellules photovoltaïques peuvent être séparées, mais également désolidarisées du verre du panneau photovoltaïque, ce qui facilite le procédé selon l'invention.

Une fois les cellules photovoltaïques désolidarisées, elles sont avantageusement déconnectées les unes des autres et des connecteurs électriques, puis broyées selon le procédé de l'invention.

De manière avantageuse, l'étape de broyage permet d'obtenir des particules fines de taille inférieure à 1 centimètre. La taille correspond à la dimension la plus importante de la particule, généralement le diamètre ou la longueur.

Le broyage peut être réalisé dans un broyeur conventionnel, tel que notamment un broyeur à boulet ou un mortier-pilon.

Le broyage permet d'augmenter la surface active pouvant être traitée pour récupérer l'argent.

A l'issue de l'étape de broyage, la cellule photovoltaïque broyée (particules) est traitée avec une solution acide. Ce traitement permet de dissoudre sélectivement l'argent, tout en limitant la dissolution de l'aluminium, bien que l'aluminium soit présent en quantité majoritaire par rapport à l'argent dans la cellule photovoltaïque traitée.

Les conditions mises en oeuvre permettent en outre de minimiser la quantité d'acide nécessaire.

La solution acide présente un pH compris entre 2 et 4, avantageusement entre 2.5 et 3. Elle comprend :
- au moins un acide ;
- au moins un agent complexant de l'argent ;
- au moins un oxydant ; et
- optionnellement au moins un sel de sulfate.

Il s'agit d'une solution aqueuse, avantageusement dépourvu de solvant autre que l'eau.

Selon un mode de réalisation particulier, l'acide utilisé présente un pKa compris entre - 7 et 2. Il s'agit d'un acide de Bronsted, c'est-à-dire un acide apte à libérer au moins un proton. Il peut notamment être choisi dans le groupe comprenant l'acide sulfurique H₂SO₄ , l'acide nitrique HNO₃ ; et leurs mélanges.

L'agent complexant de la solution acide présente une concentration avantageusement comprise entre 0.01 et 1 mol/L. De manière encore plus avantageuse, cette concentration est égale à deux fois stoechiométrie d'argent à dissoudre.

Cette gamme de concentrations d'agent complexant est particulièrement avantageuse, étant donné qu'une concentration inférieure à 0.01 mol/L diminue le caractère complexant, alors qu'une concentration supérieure à 1 mol/L correspond généralement au taux de saturation de la solution en agent complexant.

Comme son nom l'indique, l'agent complexant permet de complexer l'élément argent dissous par l'acide. Le traitement acide permet ainsi d'obtenir une solution acide contenant un complexe d'argent.

Selon un mode de réalisation avantageux, l'agent complexant est la thio-urée (numéro CAS 62-56-6).

L'oxydant peut notamment être choisi dans le groupe comprenant le dioxygène ; le sulfate de fer (III) ; et le sulfate de cuivre(II).

L'oxydant de la solution acide présente une concentration avantageusement comprise entre 0.001 et 1 mol/L. De manière encore plus avantageuse, cette concentration est égale à deux fois stoechiométrie d'argent à dissoudre.

De manière avantageuse, l'oxydant est l'oxygène, dissous à saturation dans la solution acide.

La présence d'un oxydant permet notamment de former un oxyde d'aluminium, et ainsi d'assurer la sélectivité du traitement, en évitant la dissolution de l'aluminium par la solution acide.

Selon un mode de réalisation particulier, lorsque l'oxydant est le dioxygène, le traitement acide peut être réalisé en présence d'un bullage d'air ou de dioxygène. Ce bullage peut être mis en oeuvre pendant une partie ou l'intégralité du traitement acide. Il a pour effet d'améliorer la cinétique de dissolution du métal argent.

Le sel de sulfate peut être tout sel hydrosoluble de l'ion sulfate [SO₄²⁻] seul ou en mélange.

De manière générale, le sel de sulfate est un sel hydrosoluble de l'ion sulfate [SO₄²⁻]. Il peut notamment être choisi dans le groupe comprenant Na₂SO₄ ; K₂SO₄ ; et CaSO₄.

De manière avantageuse, la solution acide peut comprendre 0.001 à 1 mol/L de sel de sulfate, plus avantageusement 0.1 à 0.5 mol/L.

De manière générale, le traitement acide consiste à immerger les particules de cellule photovoltaïque broyée dans la solution acide c'est à dire la solution contenant également l'agent complexant et l'oxydant.

La température du traitement acide, c'est-à-dire la température de la solution acide, est avantageusement comprise entre 20 et 80°C, plus avantageusement entre 20 et 30°C. Le traitement acide peut notamment être réalisé à la température ambiante.

De manière avantageuse, le traitement acide est réalisé à la température ambiante.

La durée du traitement acide est avantageusement comprise entre 1 et 48 heures, plus avantageusement entre 4 et 8 heures.

Comme déjà indiqué, le pH de la solution acide mise en oeuvre est compris entre 2 et 4.

Lors de la mise en oeuvre du procédé selon l'invention, le pH de la solution acide est maintenu à ces valeurs. Cela peut donc nécessiter l'addition d'acide au cours du traitement acide.

De manière générale, un pH inférieur à 2 ne permet pas la sélectivité du traitement alors qu'un pH supérieur à 4 diminue la cinétique de récupération de l'argent.

Les conditions du traitement (pH de la solution acide, température, et présence d'un oxydant tel que l'oxygène) permettent d'assurer et maintenir la sélectivité quant à la récupération de l'argent. Ces conditions permettent d'éviter la dissolution de l'aluminium.

Ces conditions permettent également de diminuer la quantité d'énergie nécessaire et d'améliorer la sécurité par rapport aux procédés de l'art antérieur qui peuvent mettre en oeuvre des solutions acides en ébullition.

Le traitement au moyen de la solution acide est avantageusement réalisé sous agitation mécanique, par exemple entre 200 et 1000 tours/minute.

Selon un mode de réalisation particulier de l'invention, l'étape de traitement acide met en oeuvre une solution d'acide sulfurique comprenant 0.25 à 5 mol/L de thio-urée.

Une fois le traitement acide réalisé, l'argent dissous (sous forme complexée) dans la solution acide est récupéré.

La solution acide et les particules de cellule photovoltaïque sont avantageusement séparées, par exemple par filtration et/ou par centrifugation.

Une fois le traitement acide terminé, l'élément argent contenu dans la solution acide peut être récupéré par :
- électrodéposition ;
- cémentation ; ou
- précipitation.

Cette étape de récupération met en oeuvre une technique de chimie séparative permettant de récupérer l'élément argent sous forme métallique ou sous forme d'un sel, c'est-à-dire sous une forme valorisable.

La récupération par électrodéposition peut notamment être réalisée par électrolyse à compartiment séparé. Il s'agit d'une électrolyse dans laquelle on place la solution acide résultant du traitement acide dans un compartiment cathodique. Cette solution comprend l'élément argent sous forme complexée. Par application d'un courant électrique, l'argent est électrodéposé sur une électrode qui est avantageusement de type acier inoxydable, titane ou graphite. Cette méthode est particulièrement avantageuse étant donné que l'argent est récupéré sous forme métallique pur. En outre, à l'issue de l'électrodéposition, la solution résultante contient l'agent complexant, tel que la thio-urée. La solution acide de traitement peut donc être régénérée et réutilisée, notamment en ajustant son pH.

Ainsi, la récupération par électrodéposition peut avantageusement permettre de régénérer l'agent complexant et ainsi réduire la consommation de réactifs.

Selon un autre mode de réalisation, la récupération peut être réalisée par cémentation, notamment avec de l'aluminium, du cuivre ou du zinc.

La cémentation permet d'obtenir un cément chargé en argent. Elle est avantageusement réalisée en présence de l'agent complexant de l'argent, notamment la thio-urée.

La cémentation est avantageusement réalisée par ajout de particules micrométriques d'un métal (aluminium, cuivre ou zinc). Ce métal est attaqué par les ions argent qui se réduisent sous la forme métallique tandis que le métal est dissous.

La récupération par précipitation peut être avantageusement réalisée par addition d'un composé de formule A-Xₙ, dans laquelle n = 1 ou 2 ; A étant un atome d'hydrogène (n = 1), un métal alcalin (n = 1) notamment Na ou K, un métal alcalino terreux (n = 2), ou un ammonium (n = 1) ; X étant un halogène, notamment Cl, Br, ou I.

A titre d'exemple, le composé A-Xₙ est un sel ou un acide pouvant notamment être choisi dans le groupe comprenant NaCl ; KCl ; NaBr ; KBr ; KI ; NaI ; HCl ; HI ; HBr ; et leurs mélanges.

Une fois que l'élément argent de la cellule photovoltaïque a été récupéré, le procédé peut comprendre une étape subséquente qui consiste à récupérer l'aluminium.

En effet, bien que les particules résultant de l'étape de broyage et du traitement acide soient dorénavant dépourvues ou quasi dépourvues d'argent, elles comprennent néanmoins, et majoritairement, du silicium et de l'aluminium.

L'aluminium peut alors être récupéré par traitement des particules avec une solution acide dont le pH est maintenu inférieur à 2.

Ce dernier traitement vise à dissoudre l'aluminium pour atteindre un grade métallurgique permettant la valorisation du silicium des particules (cellules broyées) dans un grade métallurgique.

Il peut notamment être réalisé par immersion des particules dans une solution d'acide sulfurique ayant un pH égal à 0.

L'invention et les avantages qui en découlent ressortiront mieux des figures et exemples suivants donnés afin d'illustrer l'invention et non de manière limitative.

### DESCRIPTION DES FIGURES

La figure 1 correspond à l'analyse par ICP de la phase liquide résultant du traitement selon un mode de réalisation particulier de l'invention.
La figure 2 correspond à l'analyse ICP de la phase liquide résultant du traitement selon un mode de réalisation particulier de l'invention.
La figure 3 correspond à une image obtenue par microscopie à balayage électronique (MEB) du dépôt d'argent obtenu selon un mode de réalisation particulier de l'invention.

### EXEMPLES DE REALISATION DE L'INVENTION

Dans les exemples 1 et 2 ci-dessous, des cellules issues de panneaux photovoltaïques conventionnels ont été utilisées.

Préalablement à la mise en oeuvre du procédé, les cellules sont traitées thermiquement afin d'éliminer, par calcination, l'EVA et séparer les cellules des connecteurs. Cette étape a lieu dans un four sous air à 500°C pendant une heure.

### Exemple 1 :

Les cellules sont broyées à l'aide d'un mortier-pilon et tamisées en une fraction homogène de particules, dont la taille moyenne est inférieure à 1 millimètre.

Ces particules sont ensuite immergées dans une solution d'acide sulfurique (pH=2) contenant 0.5 mol/L de thio-urée (TU). Le rapport massique solide/liquide entre le poids des particules et le poids de la solution acide est 0.05, soit 5%.

Les particules sont maintenues dans la solution acide pendant 18 heures, à température ambiante, avec une agitation à 400 tours/min.

Les phases solide et liquide ont ensuite été séparées par centrifugation et filtration.

Après filtration, le volume de la phase liquide a été ajusté dans une fiole jaugée, puis la solution a été analysée par ICP (de l'acronyme anglo-saxon « *Inductively Coupled Plasma* »), technique analytique à plasma induit permettant de doser les éléments tels que les métaux présents dans un échantillon.

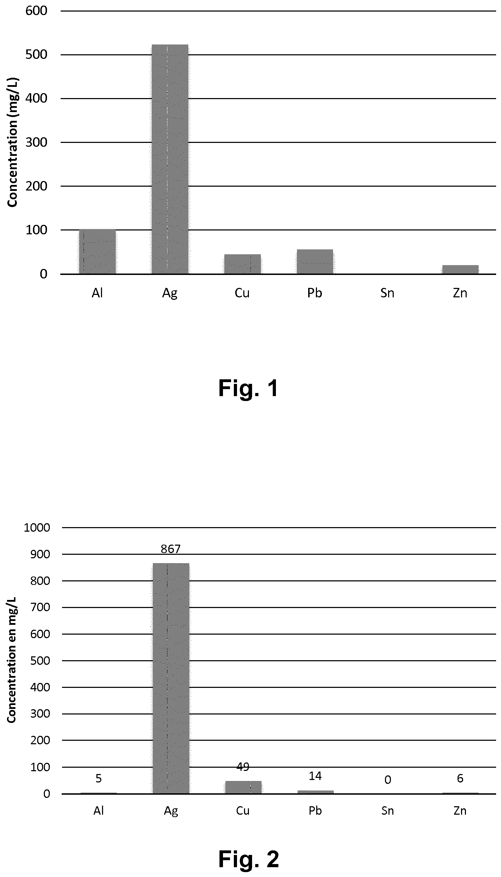

Cette analyse par ICP permet de mettre en évidence la dissolution sélective de l'argent vis-à-vis de l'aluminium (figure 1).

Dans une deuxième étape, une partie de la phase liquide a été utilisée pour récupérer l'argent par précipitation en ajoutant du NaCl (1mol.L⁻¹) directement dans la solution jusqu'à l'apparition d'un précipité.

Après centrifugation, la phase solide est mise à l'étuve puis analysée par diffraction aux rayons X (DRX). L'analyse DRX montre que la phase solide contient les composés Ag(TU)₂Cl, Na_{0.7}Ag_{0.3}Cl et du chlorure de sodium NaCl résiduel.

### Exemple 2 :

Les cellules sont broyées à l'aide d'un broyeur à boulet de manière à obtenir des particules dont la taille moyenne est inférieure à 1 centimètre.

Ces particules sont ensuite immergées dans une solution d'acide sulfurique (pH=2) contenant 0.5 mol/L de thio-urée (TU). Le rapport massique solide/liquide entre le poids des particules et le poids de la solution acide est 0.05, soit 5%.

Les particules sont maintenues dans la solution acide pendant 43 heures, à 25°C, avec une agitation à 400 tours/min, et sous un bullage d'air permanent.

Les phases solide et liquide ont ensuite été séparées par centrifugation et filtration.

La phase solide a été mise à l'étuve.

Après filtration, le volume de la phase liquide a été ajusté dans une fiole jaugée puis la solution a été analysée par ICP.

Cette analyse par ICP (figure 2) permet de mettre en évidence la dissolution sélective de l'argent vis-à-vis des autres éléments.

La phase liquide a ensuite été utilisée pour récupérer l'argent par électrodéposition sur un substrat en acier inoxydable. Un montage à trois électrodes est utilisé avec une électrode de travail en acier inoxydable faisant office de substrat. Le potentiel est maintenu à -0.45V pendant une heure (potentiostatique) ce qui permet de réduire l'argent sur l'électrode en acier inoxydable.

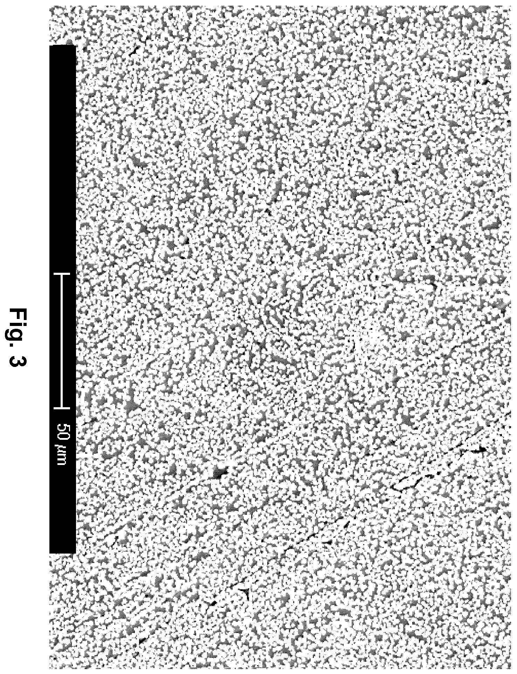

La figure 3 illustre le dépôt d'argent (zone claire) sur l'électrode en acier inoxydable, la zone sombre correspondant à la partie de l'électrode non revêtue d'argent.

L'analyse EDX (analyse dispersive en énergie de l'acronyme anglo-saxon « *energy dispersive X-ray spectrometry* ») confirme qu'il s'agit bien d'argent. Elle révèle également la présence de souffre résiduel provenant de la thio-urée. En outre, l'absence de cuivre confirme la sélectivité de l'électrodépôt.

## Revendications

1. Procédé de récupération de l'argent contenu dans une cellule photovoltaïque en silicium, ledit procédé comprenant les étapes suivantes :
- formation de particules contenant l'élément argent, par broyage de ladite cellule photovoltaïque ;
- dissolution de l'élément argent contenu dans les particules, par traitement acide des particules avec une solution acide ayant un pH compris entre 2 et 4 et comprenant au moins un acide, au moins un agent complexant de l'argent, et au moins un oxydant ;
- récupération de l'élément argent à partir de la solution acide.

2. Procédé selon la revendication 1, ***caractérisé* en ce que** le pH de la solution acide est compris entre 2.5 et 3.

3. Procédé selon la revendication 1 ou 2, ***caractérisé* en ce que** l'acide est choisi dans le groupe comprenant l'acide sulfurique ; l'acide nitrique ; et leurs mélanges.

4. Procédé selon l'une des revendications 1 à 3, ***caractérisé* en ce que** l'agent complexant présente une concentration, dans la solution acide, comprise entre 0.01 et 1 mol/L.

5. Procédé selon l'une des revendications 1 à 4, ***caractérisé* en ce que** l'agent complexant est la thio-urée.

6. Procédé selon l'une des revendications 1 à 5, ***caractérisé* en ce que** l'oxydant est choisi dans le groupe comprenant le dioxygène ; le sulfate de fer (III) ; et le sulfate de cuivre(II).

7. Procédé selon l'une des revendications 1 à 6, ***caractérisé* en ce que** le traitement acide est réalisé à une température comprise entre 20 et 80°C, pendant 1 à 48 heures.

8. Procédé selon l'une des revendications 1 à 7, ***caractérisé* en ce que** la récupération de l'élément argent est réalisée par électrodéposition par électrolyse à compartiment séparé.

9. Procédé selon l'une des revendications 1 à 7, ***caractérisé* en ce que** la récupération de l'élément argent est réalisée par cémentation avec de l'aluminium, du cuivre ou du zinc.

10. Procédé selon l'une des revendications 1 à 7, ***caractérisé* en ce que** la récupération de l'élément argent est réalisée par précipitation par addition d'un composé de formule A-Xₙ, dans laquelle n = 1 ou 2 ; A étant choisi dans le groupe comprenant : atome d'hydrogène, métal alcalin, métal alcalino terreux, et ammonium ; X étant un halogène.

## Patentansprüche

1. Verfahren zur Rückgewinnung von in einer photovoltaischen Siliziumzelle enthaltenem Silber, das die folgenden Schritte umfasst:
- Bildung von silberhaltigen Teilchen durch Zerkleinerung dieser photovoltaischen Zelle;
- Auflösung des in den Teilchen enthaltenen elementaren Silbers durch eine Säurebehandlung der Teilchen mit einer Säurelösung mit einem pH-Wert zwischen 2 und 4, die mindestens eine Säure, mindestens einen Komplexbildner für Silber und mindestens ein Oxidationsmittel enthält;
- Rückgewinnung des elementaren Silbers aus der Säurelösung.

2. Verfahren gemäß Anspruch 1, ***dadurch gekennzeichnet, dass*** der pH-Wert der Säurelösung zwischen 2,5 und 3 liegt.

3. Verfahren gemäß Anspruch 1 oder 2, ***dadurch gekennzeichnet, dass*** die Säure aus der Gruppe ausgewählt wird, die Schwefelsäure, Salpetersäure und ihre Mischungen umfasst.

4. Verfahren gemäß einem der Ansprüche 1 bis 3, ***dadurch gekennzeichnet, dass*** der Komplexbildner in der Säurelösung eine Konzentration zwischen 0,01 und 1 mol/L aufweist.

5. Verfahren gemäß einem der Ansprüche 1 bis 4, ***dadurch gekennzeichnet, dass*** es sich bei dem Komplexbildner um Thioharnstoff handelt.

6. Verfahren gemäß einem der Ansprüche 1 bis 5, ***dadurch gekennzeichnet, dass*** das Oxidationsmittel aus der Gruppe ausgewählt wird, die Disauerstoff, Eisen-(III)-Sulfat und Kupfer-(II)-Sulfat umfasst.

7. Verfahren gemäß einem der Ansprüche 1 bis 6, ***dadurch gekennzeichnet, dass*** die Säurebehandlung bei einer Temperatur zwischen 20 und 80°C 1 bis 48 Stunden lang durchgeführt wird.

8. Verfahren gemäß einem der Ansprüche 1 bis 7, ***dadurch gekennzeichnet, dass*** die Rückgewinnung des elementaren Silbers durch elektrochemische Abscheidung durch Elektrolyse mit getrennten Kammern erfolgt.

9. Verfahren gemäß einem der Ansprüche 1 bis 7, ***dadurch gekennzeichnet, dass*** die Rückgewinnung des elementaren Silbers durch Zementation mit Aluminium, Kupfer oder Zink ausgeführt wird.

10. Verfahren gemäß einem der Ansprüche 1 bis 7, ***dadurch gekennzeichnet, dass*** die Rückgewinnung des elementaren Silbers durch Ausfällung durch Zugabe einer Verbindung der Formel A-Xₙ, ausgeführt wird, in der n = 1 oder 2, wobei A dabei aus der Gruppe ausgewählt wird, die aus: Wasserstoffatom, Alkalimetall, Erdalkalimetall und Ammonium besteht und wobei X ein Halogen ist.

## Claims

1. °/ Method for recovering the silver contained in a silicon photovoltaic cell, with the said method including the following steps:
- formation of particles containing the element silver, by pulverizing the said photovoltaic cell;
- dissolving of the element silver contained in the particles, by acid treatment of the particles with an acid solution having a pH between 2 and 4 and including at least one acid, at least one silver complexing agent, and at least one oxidant;
- recovery of the element silver from the acid solution.

2. °/ Process in accordance with claim 1, ***characterized* in that** the pH of the acid solution is between 2.5 and 3.

3. °/ Process according to claim 1 or 2, ***characterized* in that** the acid is chosen from the group including sulfuric acid, nitric acid and their mixtures.

4. °/ Process according to one of claims 1 to 3, ***characterized* in that** the complexing agent has a concentration in the acid solution of between 0.01 and 1 mol/L.

5. °/ Process according to one of claims 1 to 4, ***characterized* in that** the complexing agent is thiourea.

6. °/ Process according to one of claims 1 to 5, ***characterized* in that** the oxidant is chosen from the group including dioxygen, iron sulfate (III) and copper sulfate (II).

7. °/ Process according to one of claims 1 to 7, ***characterized* in that** the acid treatment is performed at a temperature between 20 and 80°C, for 1 to 48 hours.

8. °/ Process according to one of claims 1 to 7, ***characterized* in that** the recovery of the element silver is performed by electrodeposition by electrolysis with a separate compartment.

9. °/ Process according to one of claims 1 to 7, ***characterized* in that** the recovery of the element silver is performed by cementation with aluminum, copper or zinc.

10. °/ Process according to one of claims 1 to 7, ***characterized* in that** the recovery of the element silver is performed by precipitation, by addition of a compound of formula A-Xₙ, in which n = 1 or 2, with A being chosen from the group including: hydrogen atom, alkaline metal, alkaline-earth metal and ammonium, with X being a halogen.
